# EUROPÄISCHE PATENTANMELDUNG

(11) **EP 4 016 360 A1**
(43) Veröffentlichungstag der Anmeldung: **22.06.2022**
(21) Anmeldenummer: 20216045.3
(22) Anmeldetag: 21.12.2020
(51) Int. Cl.: G06F 30/10, G06F 9/46, G06Q 10/06, H04L 29/06, G06F 111/20, G06F 119/20

(54) **VERFAHREN, COMPUTER-PROGRAMM-PRODUKT UND MODELLIERUNGSWERKZEUG ZUM REFERENZMODELLBASIERTEN, KOMPONENTENBEZOGENEN ENTWICKELN EINES TECHNISCHEN SYSTEMS**

(71) Anmelder: Siemens Aktiengesellschaft, 80333 München (DE)
(72) Erfinder: Kranz, Sieglinde, 82110 Germering (DE); Oeh, Dominik, 96146 Altendorf (DE); Regnat, Nikolaus, 81827 München (DE)

(57) **Zusammenfassung**

Um für eine Systemkomponente eines zu entwickelnden technischen Systems (SYₜ) die Systementwicklung referenzmodellbasiert zu automatisieren, wird es vorgeschlagen, durch
- Zugriffe auf einen gespeicherten Digitalen Zwilling (DZ) als komplexes Referenzmodell (RM) und digitale Repräsentation eines technisches Referenz-Systems (RSYₜ) mit mehreren, jeweils einen Beitrag zur Funktion des technischen Referenz-Systems (RSYₜ) leistenden Referenz-Systemkomponenten (RSYK) Referenzmodellkomponenten (RMK) zur Systementwicklung wiederzuwenden,
- eine computergestützte Zugriffsorchestrierung (ZGO), bei der mit einer benutzerbasierten Daten- und Befehlseingabe sowie einer logikbasierten Datenbearbeitung und Befehlsumsetzung nach regelsatzbasierter Maßgabe der Zugriff orchestriert wird, und für eine zur Systementwicklung vorgesehene, dedizierte, einen Beitrag zur Funktion des technischen Systems leistende Systemkomponente (SYK_{d}) in Bezug auf das Referenz-System eine zu diesem Zweck geeignete Referenzmodellkomponente (RMKₓ) ermittelt wird, (**i**) in einer ersten Orchestrierungsphase (OP-1) einen Ablageort in dem Digitalen Zwilling für die zur geeignete Referenzmodellkomponente (RMKₓ) zu ermitteln, (**ii**) in einer zweiten Orchestrierungsphase (OP-2) einen zum Ablageort gehörenden Teilmodellinhalt des Digitalen Zwillings (DZ) und ein Reduktionspotential des Teilmodellinhalts in Bezug auf ein mit der Wiederverwendung der Referenzmodellkomponente (RMKₓ) für die Systementwicklung benötigtes Maß zu ermitteln und (**iii**) in einer dritten Orchestrierungsphase (OP-3) eine Reduzierung des Teilmodellinhalts gemäß dem ermittelten Reduktionspotential durchzuführen und die Referenzmodellkomponente (RMKₓ) zu erzeugen.

## Beschreibung

Die Erfindung bezieht sich auf ein Verfahren zum referenzmodellbasierten, komponentenbezogenen Entwickeln eines technischen Systems gemäß dem Oberbegriff des Patentanspruches 1, ein Computer-Programm-Produkt zum referenzmodellbasierten, komponentenbezogenen Entwickeln eines technischen Systems gemäß dem Oberbegriff des Patentanspruches 4 und ein Modellierungswerkzeug zum referenzmodellbasierten, komponentenbezogenen Entwickeln eines technischen Systems gemäß dem Oberbegriff des Patentanspruches 7.

Bei der Entwicklung von komplexen Systemen unterschiedlicher technischer Domäne, im Folgenden als technisches System bezeichnet, ist es zweckmäßig auf bereits vorhandene, also schon entwickelte, Systeme gleicher oder vergleichbarer technischer Domäne und unterschiedlicher oder vergleichbarer Komplexität zurückzugreifen und deren Systemkomponenten, die zu mehreren in den bereits vorhandenen Systemen enthalten sind und die Beiträge zu Funktionen der bereits vorhandenen Systeme leisten, wiederzuverwenden. Solche Systeme werden im Folgenden als technische Referenz-Systeme und deren Systemkomponenten als Referenz-Systemkomponenten bezeichnet.

Die genannten technischen Domänen können beliebig sein. So sind es beispielsweise, nicht abschließend aufgezählt: Automatisierungstechnik, Energietechnik, Kommunikationstechnik, Medizintechnik, Fahrzeugtechnik betreffend Fahrzeuge zu Straße, Schiene, Wasser oder Luft.

Werden für die Entwicklung solcher technischen Systeme modellbasierte Verfahren eingesetzt, so müssen bei der Wiederverwendung auch Referenzmodelle der komplexen Referenz-Systeme berücksichtigt werden. Solche komplexe Referenzmodelle repräsentieren das jeweilige technische Referenz-System digital und werden demzufolge als Digitale Zwillinge bezeichnet. Jeder Digitale Zwilling eines technischen Referenz-Systems, in dem das komplexe Referenzmodell dieses Systems gespeichert ist, repräsentiert das entsprechende Referenz-System digital. Eine Wiederverwendung von komplex modellierten Referenz-Systemen und/oder Referenz-Systemkomponenten ist jedoch in aktuellen graphischen Modellierungswerkzeugen nur mit sehr begrenzten Mitteln durchführbar.

Bisherige Ansätze lösen dieses Problem nicht oder nur teilweise. Üblicherweise werden alle Modellinformationen eines komplex modellierten Referenz-Systems mit deren Referenz-Systemkomponenten zur Wiederverwendung weitergegeben. Diese Herangehensweise führt jedoch zu einer Reihe von Problemen:
- Bei einer häufigen Wiederverwendung - einer sogenannten "Systems-of-Systems"-Entwicklung steigt mit jeder Stufe der Wiederverwendung die Menge an Modellinformationen. Dies macht es nicht nur für die Modellierungswerkzeuge immer schwieriger diese Informationen zu verwalten, sondern ist vor allem für menschliche Nutzer schwer zu handhaben.
- Kritische (z.B. IP relevante) Informationen werden offengelegt und sind dadurch nicht mehr geschützt. Darüber hinaus werden interne Änderungen ebenfalls offengelegt und führen dadurch ggf. zu erhöhten Aufwänden, um die Modelle aktuell zu halten.

Es existieren darüber hinaus Ansätze, um nur Teile der Modellinformationen für die Wiederverwendung freizugeben. Diese Verfahren sind jedoch entweder mit sehr hohem Aufwand für den Anwender verbunden oder bei der Auswahl der Teilinformationen nur sehr eingeschränkt.

Die der Erfindung zugrundeliegende Aufgabe besteht darin, ein Verfahren, ein Computer-Programm-Produkt und ein Modellierungswerkzeug zum referenzmodellbasierten, komponentenbezogenen Entwickeln eines technischen Systems anzugeben, bei dem für eine Systemkomponente des zu entwickelnden technischen Systems auf der Basis eines Referenzmodells die Systementwicklung automatisiert werden kann.

Die vorstehend bezeichnete Aufgabe wird ausgehend von dem im Oberbegriff des Patentanspruches 1 definierten Verfahren durch die im Kennzeichen des Patentanspruches 1 angegebenen Merkmale gelöst.

Darüber hinaus wird diese Aufgabe ausgehend von dem im Oberbegriff des Patentanspruches 4 definierten Computer-Programm-Produkt durch die im Kennzeichen des Patentanspruches 4 angegebenen Merkmale gelöst.

Weiterhin wird diese Aufgabe ausgehend von dem im Oberbegriff des Patentanspruches 7 definierten Modellierungswerkzeug durch die im Kennzeichen des Patentanspruches 7 angegebenen Merkmale gelöst.

Die der Erfindung zugrundeliegende Idee gemäß der in den Ansprüchen 1, 4 und 7 [Anspruch 1 betreffend ein Verfahren; Anspruch 4 betreffend ein Computer-Programm-Produkt; Anspruch 7 betreffend ein Modellierungswerkzeug] jeweils angegebenen technischen Lehre besteht darin, dass durch
a) Zugriffe auf einen gespeicherten Digitalen Zwilling als komplexes Referenzmodell und digitale Repräsentation eines technisches Referenz-Systems mit mehreren, jeweils einen Beitrag zur Funktion des technischen Referenz-Systems leistenden Referenz-Systemkomponenten Referenzmodellkomponenten zur Entwicklung des technischen Systems wiederverwendbar sind,
b) eine computergestützte Zugriffsorchestrierung, bei der mit einer benutzerbasierten Daten- und Befehlseingabe sowie einer logikbasierten Datenbearbeitung und Befehlsumsetzung nach regelsatzbasierter Maßgabe der Zugriff orchestriert wird, und für eine zur Entwicklung des technischen Systems, insbesondere durch Benutzerauswahl, vorgesehene, dedizierte Systemkomponente, die einen Beitrag zur Funktion des technischen Systems leistet, in Bezug auf das Referenz-System mit den Referenz-Systemkomponenten eine zu diesem Zweck geeignete Referenzmodellkomponente der wiederverwendbaren Referenzmodellkomponenten ermittelt wird,
b1) in einer ersten Orchestrierungsphase ein Ablageort in dem Digitalen Zwilling für die zur Entwicklung des technischen Systems geeignete Referenzmodellkomponente ermittelt wird, b2) in einer zweiten Orchestrierungsphase ein zum Ablageort gehörender Teilmodellinhalt des Digitalen Zwillings und ein Reduktionspotential des Teilmodellinhalts in Bezug auf ein mit der Wiederverwendung der Referenzmodellkomponente für die Entwicklung des technischen Systems benötigtes Maß ermittelt werden,
b3) in einer dritten Orchestrierungsphase eine Reduzierung des Teilmodellinhalts gemäß dem ermittelten Reduktionspotential durchgeführt und die Referenzmodellkomponente erzeugt wird.

Im Gegensatz zu den bekannten Lösungen ist es mit der vorstehend vorgeschlagenen Vorgehensweise wesentlich einfacher, Modellkomponenten für eine referenzmodellbasierte, komponentenbezogene Entwickelung eines technischen Systems zu identifizieren, wiederzuverwenden und zur Verfügung zu stellen. Durch die Reduzierung der Informationen auf das für die Wiederverwendung notwendige Maß werden zudem kritische Informationen, die z.B. Geistiges Eigentum betreffen, geschützt.

Vorteilhafte Weiterbildungen Erfindung betreffend das Verfahren nach Anspruch 1 sind in den anhängigen Ansprüchen 2 und 3 angegeben, während vorteilhafte Weiterbildungen Erfindung, die das Computer-Programm-Produkt nach Anspruch 4 betreffen, in den anhängigen Ansprüchen 5 und 6 angegeben sind.

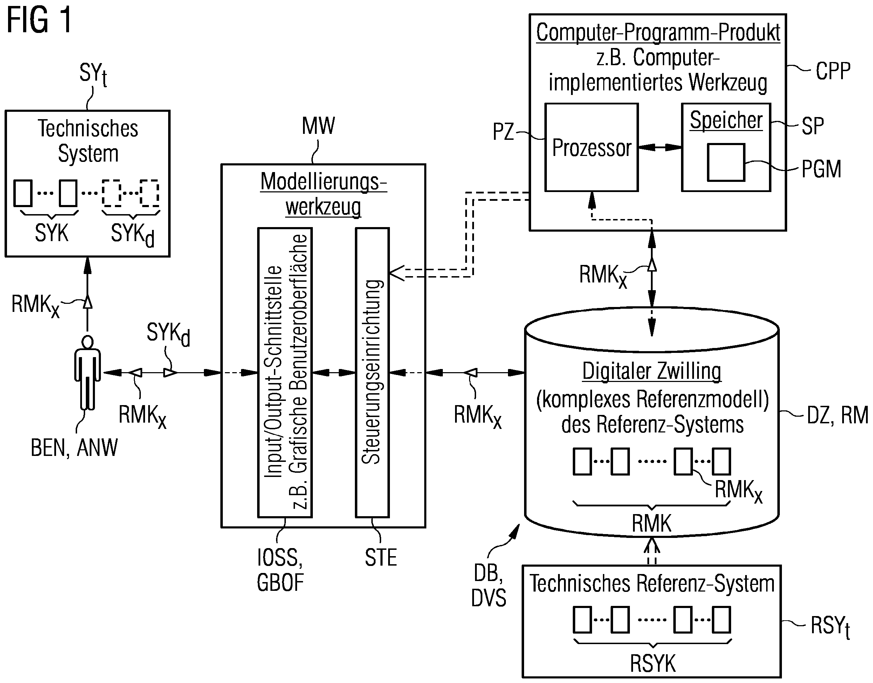

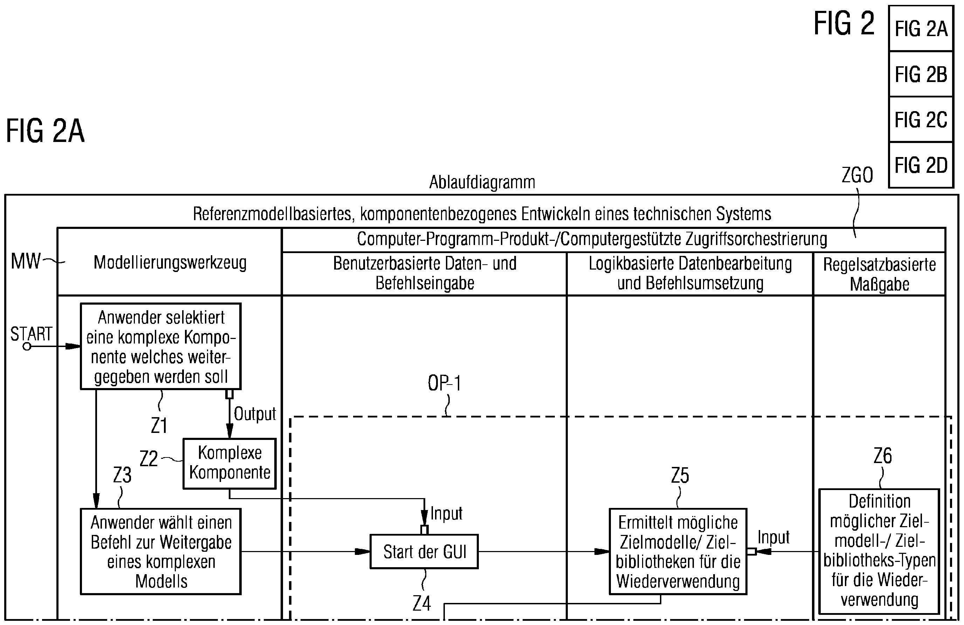

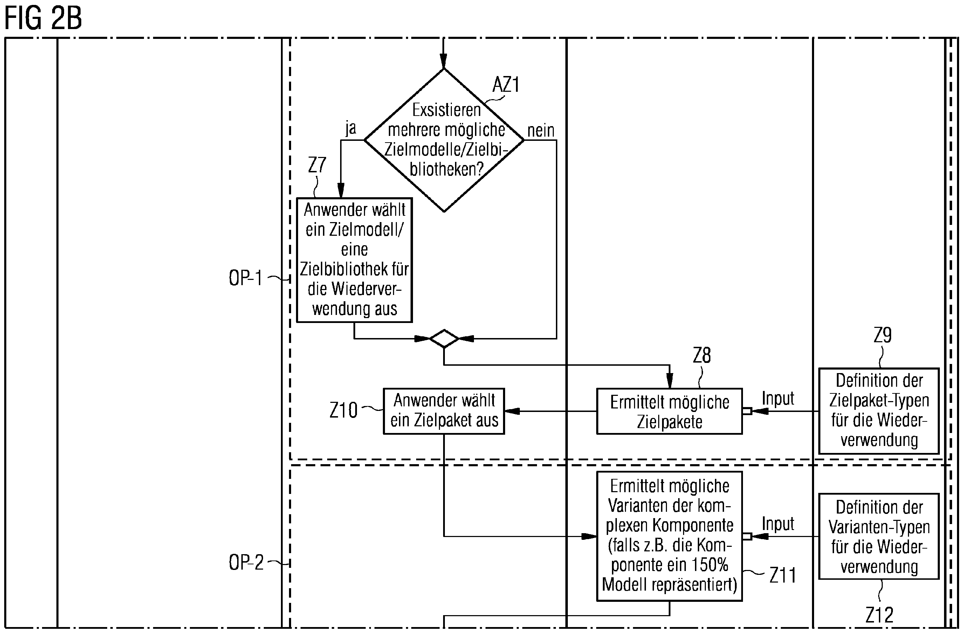

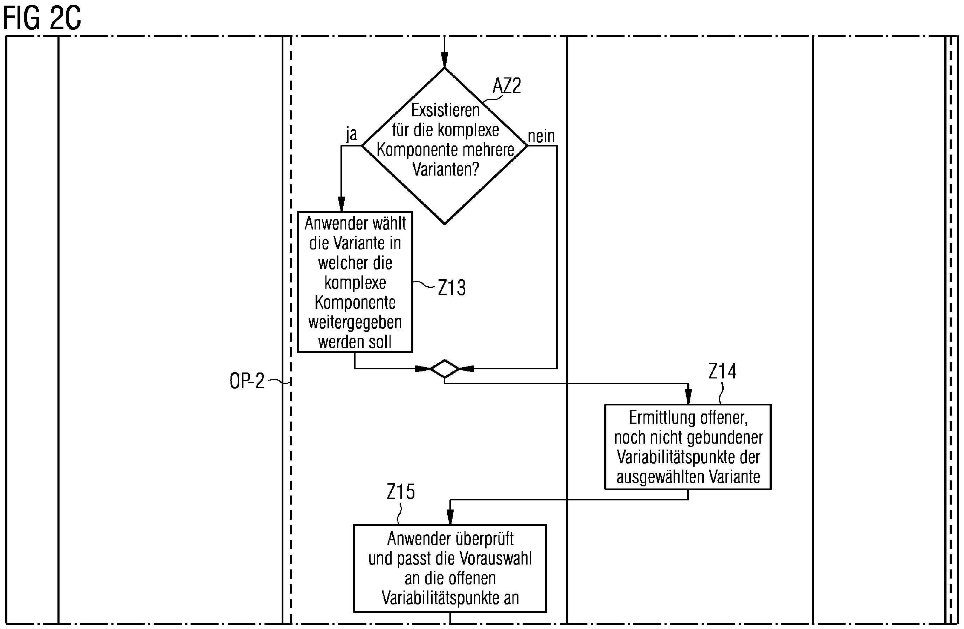

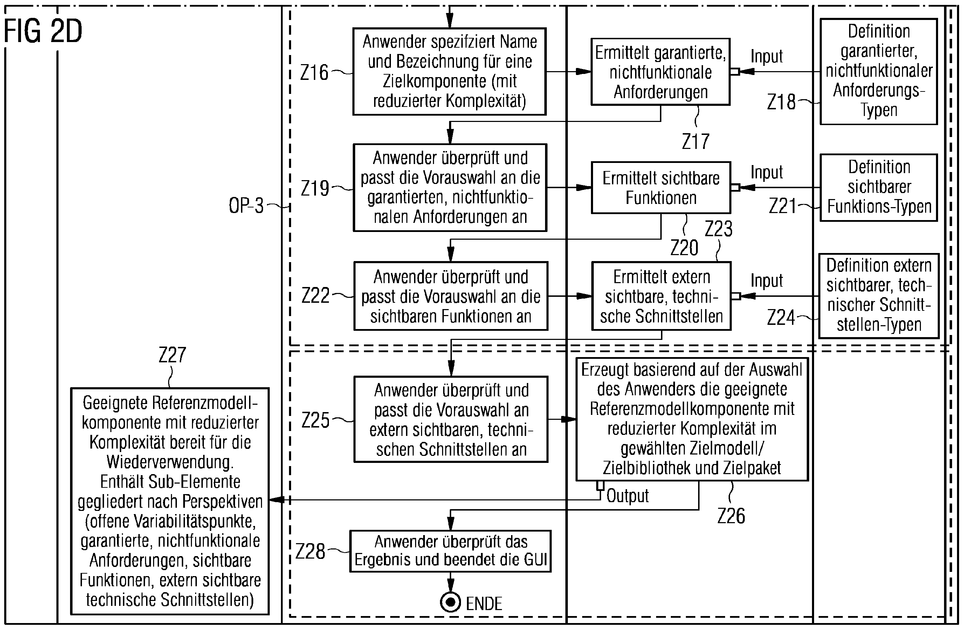

Weitere Vorteile der Erfindung ergeben sich aus den Unteransprüchen sowie der nachfolgenden Beschreibung eines Ausführungsbeispiels der Erfindung anhand der FIGUREN 1 und 2 erläutert. Diese zeigen:
- FIGUR 1: Szenario zum referenzmodellbasierten, komponentenbezogenen Entwickeln eines technischen Systems,
- FIGUR 2: Ablaufdiagramm für das referenzmodellbasierte, komponentenbezogene Entwickeln des technischen Systems gemäß dem in der FIGUR 1 dargestellten Szenario.

FIGUR 1 zeigt ein Szenario zum referenzmodellbasierten, komponentenbezogenen Entwickeln eines technischen Systems SYₜ. Im final entwickelten Zustand enthält ein solches technisches System SYₜ enthält eine Vielzahl von Systemkomponenten SYK, die Teilsysteme des technische System SYₜ darstellen und die jeweils einen Beitrag zur Funktion des technischen Systems SYₜ leisten. Das in der FIGUR 1 dargestellte technischen System SYₜ ist jedoch noch nicht fertig entwickelt, was durch gestrichelt dargestellte Systemkomponenten bzw. Teilsysteme gezeigt wird. So gibt es eine zur Entwicklung des technischen Systems SYₜ vorgesehene, dedizierte Systemkomponente SYK_{d}, die wie die anderen Systemkomponenten auch einen Beitrag zur Funktion des technischen Systems SYₜ leistet. Die diesbezüglich vorgesehene Entwicklung des technischen Systems SYₜ soll erfindungsgemäß referenzmodellbasiert erfolgen, was nachfolgend und im Weiteren im Kontext der Beschreibung von FIGUR 2 erläutert werden wird.

Das technische System SYₜ ist Gegenstand einer "physikalischen Welt" kann gemäß der eingangs angegebenen Definition für technische Domänen z.B. im Bereich der Medizintechnik ein Computertomograph oder ein Magnetresonanztomograph oder im Bereich der Energietechnik eine Windkraftanlage oder im Bereich der Fahrzeugtechnik ein Personenkraftwagen (Auto) sein. Die dedizierte Systemkomponente bzw. das dedizierte Teilsystem SYK_{d}, die bzw. das für die Entwicklung des technischen Systems SYₜ vorgesehen ist, könnte demzufolge z.B. im Bereich der Medizintechnik ein Detektor oder im Bereich der Energietechnik ein Generator oder im Bereich der Fahrzeugtechnik ein Motor sein.

Weitere Gegenstände der "physikalischen Welt" gemäß dem dargestellten Szenario zur referenzmodellbasierten, komponentenbezogenen Entwickelung des technischen Systems SYₜ sind ein technisches Referenz-System RSYₜ mit mehreren Referenz-Systemkomponenten RSYK, die auch wieder jeweils einen Beitrag zur Funktion des technischen Referenz-Systems RSYₜ leisten, und ein Modellierungswerkzeug MW zur modellbasierten Entwicklung komplexer technischer Systeme, das vorzugsweise als Arbeitsplatzrechner (Workstation) oder Personal Computer ausgebildet ist.

Beide sind insofern das Bindeglied zu einer "digitalen Welt" als das technisches Referenz-System RSYₜ mit den Referenz-Systemkomponenten RSYK, das in Bezug auf die technische Domäne mit dem technischen System SYₜ gleich oder vergleichbar ist und in Bezug auf die Systemkomplexität unterschiedlich oder vergleichbar sein kann, durch einen in einer Datenbank DB oder in einem Datenverarbeitungssystem DVS gespeicherten, zur "digitalen Welt" gehörenden Digitalen Zwilling DZ als komplexes Referenzmodell RM des technischen Referenz-Systems RSYₜ digital repräsentiert wird und das Modellierungswerkzeug MW durch Zugriffe auf den Digitalen Zwilling DZ Referenzmodellkomponenten RMK für die Entwicklung des technischen Systems SYₜ wiederverwenden kann und zu diesem Zweck eine geeignete Referenzmodellkomponente RMKₓ der wiederverwendbaren Referenzmodellkomponenten RMK bestimmt wird, z.B. durch Selektion oder Auswahl.

Um diese geeignete Referenzmodellkomponente RMKₓ wiederverwenden zu können, weist das Modellierungswerkzeug MW eine Steuerungseinrichtung STE und eine mit der Steuerungseinrichtung STE verbundene und vorzugsweise als Grafische Benutzeroberfläche GBOF ausgebildete Input/Output-Schnittstelle IOSS für Benutzereingaben und -ausgaben eines Benutzers BEN oder Anwenders ANW des Modellierungswerkzeugs MW auf.

Die Steuerungseinrichtung STE ist für die Entwicklung des technischen Systems SYₜ und die Zugriffe auf den Digitalen Zwilling DZ mit der Datenbank DB oder dem Datenverarbeitungssystem DVS verbunden.

Die Wiederverwendung der Referenzmodellkomponente RMKₓ wird aber weder von dem Modellierungswerkzeug MW noch von der Steuerungseinrichtung STE als solches durchgeführt, sondern die Wiederverwendung ist Gegenstand eines weiteren digitalen Bausteins in der "digitalen Welt". Dieser digitale Baustein ist ein Computer-Programm-Produkt CPP zum referenzmodellbasierten, komponentenbezogenen Entwickeln des technischen Systems SYₜ, das als Computer-implementiertes Werkzeug ausgebildet ist und vorzugsweise eine Anwendungssoftware - auch als "APP" bezeichnet - darstellt.

Weiterhin weist das Computer-Programm-Produkt CPP einen nicht-flüchtigen, lesbaren Speicher SP, in dem prozessorlesbare Steuerprogrammbefehle eines Programm-Moduls PGM zum referenzmodellbasierten, komponentenbezogenen Entwickeln des technischen Systems SYₜ gespeichert sind, sowie einen mit dem Speicher SP verbundenen Prozessor PZ, der die Steuerprogrammbefehle des Programm-Moduls PGM zur Systementwicklung und in diesem Kontext die Ermittlung der Referenzmodellkomponente RMKₓ ausführt, aufweist.

Dieses Computer-Programm-Produkt CPP, das als Computer-implementiertes Werkzeug oder die "APP" ist zum referenzmodellbasierten, komponentenbezogenen Entwickeln des technischen Systems SYₜ in die Steuerungseinrichtung STE ladbar [in der FIGUR 1 ist durch den gestrichelten Doppelpfeil (Pfeil mit doppelter Basis) dargestellt] und kann unabhängig von dem Modellierungswerkzeug MW entwickelt und vertrieben werden.

Wie das referenzmodellbasierte, komponentenbezogene Entwickeln des technischen Systems SYₜ und im Kontext dazu die Wiederverwendung der Referenzmodellkomponente RMKₓ gemäß dem dargestellten Szenario funktioniert und in dem Modellierungswerkzeug MW und in dem Computer-Programm-Produkt CPP abläuft und durchgeführt wird, wird nun im Zusammenhang mit FIGUR 2 erläutert.

FIGUR 2 zeigt ein Ablaufdiagramm für das referenzmodellbasierte, komponentenbezogene Entwickeln des technischen Systems SYₜ gemäß dem in der FIGUR 1 dargestellten Szenario. Gemäß diesem Ablaufdiagramm wird die Entwicklung des technischen Systems SYₜ im Kontext der Wiederverwendung der Referenzmodellkomponente RMKₓ im Wesentlichen durch eine Zugriffsorchestrierung ZGO, bei der szenariogemäß, gestützt durch das Computer-Programm-Produkt CPP oder computergestützt die Zugriffe auf den Digitalen Zwilling DZ zur Wiederverwendung der geeigneten Referenzmodellkomponente RMKₓ aus den wiederverwendbaren Referenzmodellkomponenten RMK des Digitalen Zwillings DZ orchestriert werden.

Die Zugriffsorchestrierung ZGO, gemäß der jeder Zugriff mit einer benutzerbasierten Daten- und Befehlseingabe sowie einer logikbasierten Datenbearbeitung und Befehlsumsetzung nach regelsatzbasierter Maßgabe orchestriert wird, unterteilt sich nach dem in der FIGUR 2 dargestellten Ablaufdiagramm in drei Orchestrierungsphasen, einer ersten Orchestrierungsphase OP-1, einer zweiten Orchestrierungsphase OP-2 und einer dritten Orchestrierungsphase OP-3.

Nach regelsatzbasierter Maßgabe bedeutet dabei, dass Regeln maßgebend definieren, welche Informationen, z.B. Aspekte des Referenzmodell bzw. des Digitalen Zwillings, relevant für die Entwicklung einer Komponente des Systems SYₜ sind. Basierend auf diesen Regeln wird also identifiziert welche Informationen zur Wiederverwendung für die Entwicklung der Systemkomponente weitergegeben werden müssen und welche weggelassen werden können. Darüber hinaus definieren die Regeln in welcher Art und Weise Informationen transformiert oder umgewandelt werden sollen.

Diese Regeln können vordefiniert werden und bestimmen dabei in welcher Art und Weise eine Reduktion von Aspekten des Referenzmodells vorgenommen wird, d.h. welche Informationen weggelassen werden sollen.

Die Systementwicklung startet gemäß dem Ablaufdiagramm damit, dass in einem ersten Zustand Z1 der Anwender ANW oder Benutzer BEN nach der FIGUR 1 über das Modellierungswerkzeug MW für eine Komponente des Systems SYₜ, z.B. die dedizierte Systemkomponente SYK_{d}, eine komplexe Komponente des Referenzmodells, z.B. die Referenzmodellkomponente RMKₓ, selektiert, welche zur Wiederverwendung für die Systementwicklung weitergegeben werden soll. Dabei werden in einem zweiten Zustand Z2 die komplexe Komponente für die Weitergabe spezifiziert und in einem dritten Zustand Z3 von dem Anwender ANW oder Benutzer BEN ein Befehl zur Weitergabe der komplexen Komponente ausgewählt.

Dies ist der Übergang von dem Modellierungswerkzeug MW zur ersten Orchestrierungsphase OP-1 der durch das Computer-Programm-Produkt CPP gestützten oder computergestützten Zugriffsorchestrierung ZGO. Dabei wird zunächst im Zuge der benutzerbasierten Daten- und Befehlseingabe bei der Zugriffsorchestrierung ZGO in einem vierten Zustand Z4 die Grafische Benutzeroberfläche GBOF (engl. Graphical User Interface <GUI>) gestartet.

Auf der Basis des spezifizierten komplexen Komponente (vgl. Zustand Z2) und der Befehlsauswahl (vgl. Zustand Z3) werden in der ersten Orchestrierungsphase OP-1, in der es darum geht, einen Ablageort in dem Digitalen Zwilling DZ für die zur Entwicklung des technischen Systems SYₜ geeignete Referenzmodellkomponente RMKₓ zu ermitteln, in einem fünften Zustand Z5 im Zuge der logikbasierten Datenbearbeitung und Befehlsumsetzung bei der Zugriffsorchestrierung ZGO mögliche Zielmodelle und/oder mögliche Zielbibliotheken ermittelt.

Zielbibliothek und Zielmodell beziehen sich rein auf den Ablageort in der Datenbank DB oder in dem Datenverarbeitungssystem DVS, wo das Referenzmodell zur Wiederverwendung bereitgestellt werden soll. Das kann so z.B. die Datenbank DB sein, die z.B. als Bibliothek (Zielbibliothek) mit einer definierten Unterstruktur als Paket (Zielpaket) dient.

Für diese Ermittlung des Ablageortes werden im Zuge der regelbasierten Maßgabe bei der Zugriffsorchestrierung ZGO in einem sechsten Zustand Z6 mögliche Zielmodell- und/oder Zielbibliotheks-Typen für die Wiederverwendung definiert.

Sind die möglichen Zielmodelle und/oder Zielbibliotheken ermittelt (vgl. Zustand Z5), dann wird in einem ersten Abfragezustand AZ1 im Zuge der benutzerbasierten Daten- und Befehlseingabe bei der Zugriffsorchestrierung ZGO abgefragt, ob mehrere mögliche Zielmodelle und/oder Zielbibliotheken existieren. Beim Abfrageergebnis "JA" wird im Zuge der benutzerbasierten Daten- und Befehlseingabe bei der Zugriffsorchestrierung ZGO in einem siebten Zustand Z7 von dem Anwender ANW oder Benutzer BEN ein Zielmodell und/oder eine Zielbibliothek ausgewählt und danach geht es direkt in einem achten Zustand Z8 mit dem Ablauf zur Systementwicklung weiter, während beim Abfrageergebnis "NEIN" es direkt in den achten Zustand Z8 mit dem Ablauf zur Systementwicklung weitergeht

In diesem achten Zustand Z8 werden im Zuge der logikbasierten Datenbearbeitung und Befehlsumsetzung bei der Zugriffsorchestrierung ZGO mögliche Zielpakete ermittelt. Zur Erläuterung, was ein Zielpaket ist, wird auf die Erläuterungen zu "Zielbibliothek und Zielmodell" verwiesen (vgl. vorstehende Ausführungen zu Zustand Z5).

Für diese Ermittlung der möglichen Zielpakete im Zuge einer abgestuften Ermittlung des Ablageortes (1. Stufe betrifft die Ermittlung der möglichen Zielmodelle und/oder Zielbibliotheken und 2. Stufe betrifft die Ermittlung der möglichen Zielpakete) werden im Zuge der regelbasierten Maßgabe bei der Zugriffsorchestrierung ZGO in einem neunten Zustand Z9 mögliche Zielpaket-Typen für die Wiederverwendung definiert.

Zum Abschluss der ersten Orchestrierungsphase OP-1 wird in einem zehnten Zustand Z10 im Zuge der benutzerbasierten Daten- und Befehlseingabe bei der Zugriffsorchestrierung ZGO von dem Anwender ANW oder Benutzer BEN ein Zielpaket aus den möglichen Zielpaketen ausgewählt.

Mit der Auswahl des Zielpaket und damit der Ermittlung des Ablageortes findet gemäß der Zugriffsorchestrierung ZGO der Übergang von der ersten Orchestrierungsphase OP-1 zur zweiten Orchestrierungsphase OP-2 statt.

Gemäß der zweiten Orchestrierungsphase OP-2 bei der Zugriffsorchestrierung ZGO werden ein zum Ablageort gehörender Teilmodellinhalt des Digitalen Zwillings DZ und ein Reduktionspotential des Teilmodellinhalts in Bezug auf ein mit der Wiederverwendung der Referenzmodellkomponente RMKₓ für die Entwicklung des technischen Systems SYₜ benötigtes Maß ermittelt.

Ausgangspunkt ist hierfür nach dem Übergang von der ersten Orchestrierungsphase OP-1 aus dem zehnten Zustand Z10 zu der zweiten Orchestrierungsphase OP-2 in einen elften Zustand Z11. In diesem elften Zustand Z11 werden im Zuge der logikbasierten Datenbearbeitung und Befehlsumsetzung bei der Zugriffsorchestrierung ZGO mögliche Varianten der komplexen Komponente ermittelt. Dies trifft z.B. dann zu, falls die komplexe Komponente ein größeres Modell repräsentiert, so z.B. ein 150%-Modell.

Repräsentiert die komplexe Komponente eine Vielzahl von realen Komponenten, so muss die Wahl getroffen werden, welche oder alle dieser Varianten für die Wiederverwendung zur Verfügung gestellt werden soll.

Für diese Ermittlung der möglichen Varianten werden im Zuge der regelbasierten Maßgabe bei der Zugriffsorchestrierung ZGO in einem zwölften Zustand Z12 mögliche Varianten-Typen für die Wiederverwendung definiert.

Sind die möglichen Varianten ermittelt (vgl. Zustand Zll), dann wird in einem zweiten Abfragezustand AZ2 im Zuge der benutzerbasierten Daten- und Befehlseingabe bei der Zugriffsorchestrierung ZGO abgefragt, ob mehrere mögliche Varianten für die komplexen Komponente existieren. Beim Abfrageergebnis "JA" wird im Zuge der benutzerbasierten Daten- und Befehlseingabe bei der Zugriffsorchestrierung ZGO in einem dreizehnten Zustand Z13 von dem Anwender ANW oder Benutzer BEN eine Variante ausgewählt, in welcher die komplexe Komponente für die Wiederverwendung weitergegeben werden soll und danach geht es direkt in einem vierzehnten Zustand Z14 mit dem Ablauf zur Systementwicklung weiter, während es beim Abfrageergebnis "NEIN" direkt in den vierzehnten Zustand Z14 mit dem Ablauf zur Systementwicklung weitergeht. Bei der Auswahl handelt es sich um eine Vorauswahl.

In diesem vierzehnten Zustand Z14 werden im Zuge der logikbasierten Datenbearbeitung und Befehlsumsetzung bei der Zugriffsorchestrierung ZGO offene Variabilitätspunkte der ausgewählten Variante ermittelt.

Variabilitätspunkte beschreiben Merkmale in denen sich verschiedene Ausprägungen einer Komponente unterscheiden können und offene Variabilitätspunkte sind noch nicht gebundenen, also ungebundene Variabilitätspunkte, "nach außen" sichtbar und werden deshalb beibehalten, während alle anderen im Sinne einer Reduzierung der Komplexität weggelassen werden.

Danach werden in einem fünfzehnten Zustand Z15 im Zuge der benutzerbasierten Daten- und Befehlseingabe bei der Zugriffsorchestrierung ZGO von dem Anwender ANW oder Benutzer BEN die Vorauswahl überprüft und die Vorauswahl an die offenen Variabilitätspunkte angepasst. Anschließend werden von dem Anwender ANW oder Benutzer BEN in einem sechzehnten Zustand Z16 im Zuge der benutzerbasierten Daten- und Befehlseingabe bei der Zugriffsorchestrierung ZGO Name und Bezeichner für eine Zielkomponente spezifiziert, die eine reduzierte Komplexität hat und als mögliche Referenzmodellkomponente in Frage kommt.

Auf der Basis dieser Spezifizierung werden in einem siebzehnten Zustand Z17 im Zuge der logikbasierten Datenbearbeitung und Befehlsumsetzung bei der Zugriffsorchestrierung ZGO garantierte, nichtfunktionale Anforderungen ermittelt. Dabei handelt es sich um Merkmale der Zielkomponente, welche zugesicherte Eigenschaften der Zielkomponente sind.
Beispiel: Eine zugesicherte Eigenschaft könnte sein bei welcher Temperatur die Komponente betrieben werden kann. Oder welche Reaktionszeit die Komponente auf bestimmte Eingaben zu leisten vermag.

Für diese Ermittlung der garantierten, nichtfunktionalen Anforderungen werden im Zuge der regelbasierten Maßgabe bei der Zugriffsorchestrierung ZGO in einem achtzehnten Zustand Z18 garantierte, nichtfunktionale Anforderungs-Typen definiert.

Nach der Ermittlung der garantierten, nichtfunktionalen Anforderungen werden in einem neunzehnten Zustand Z19 im Zuge der benutzerbasierten Daten- und Befehlseingabe bei der Zugriffsorchestrierung ZGO von dem Anwender ANW oder Benutzer BEN die Vorauswahl wieder überprüft und die Vorauswahl an die garantierten, nichtfunktionalen Anforderungen angepasst.

Auf der Basis dieser Anpassung werden in einem zwanzigsten Zustand Z20 im Zuge der logikbasierten Datenbearbeitung und Befehlsumsetzung bei der Zugriffsorchestrierung ZGO sichtbare Funktionen ermittelt. Dies ist das "von außen" sichtbare Verhalten der Zielkomponente als mögliche Referenzmodellkomponente oder die "von außen" sichtbare Funktionalität der Zielkomponente als mögliche Referenzmodellkomponente.
Beispiel: Die Komponente kann menschliche Spracheingaben erkennen und verarbeiten. Dies ist eine "von außen" sichtbare Funktionalität der Komponente.

Für diese Ermittlung der sichtbaren Funktionen werden im Zuge der regelbasierten Maßgabe bei der Zugriffsorchestrierung ZGO in einem einundzwanzigsten Zustand Z21 sichtbare Funktions-Typen definiert.

Nach der Ermittlung der sichtbaren Funktionen werden in einem zweiundzwanzigsten Zustand Z22 im Zuge der benutzerbasierten Daten- und Befehlseingabe bei der Zugriffsorchestrierung ZGO von dem Anwender ANW oder Benutzer BEN die Vorauswahl erneut überprüft und die Vorauswahl an die sichtbaren Funktionen angepasst.

Auf der Basis dieser erneuten Anpassung und zum Abschluss der zweiten Orchestrierungsphase OP-2 werden in einem dreiundzwanzigsten Zustand Z23 im Zuge der logikbasierten Datenbearbeitung und Befehlsumsetzung bei der Zugriffsorchestrierung ZGO extern sichtbare, technische Schnittstellen ermittelt. Dies sind in erster Linie technische Schnittstellen der Zielkomponente als mögliche Referenzmodellkomponente, die "von außen" sichtbar und damit zugreifbar sind.
Beispiel: Die Komponente hat einen "Universal Serial Bus <USB>"-Anschluss.

Für diese Ermittlung der extern sichtbaren, technischen Schnittstellen werden im Zuge der regelbasierten Maßgabe bei der Zugriffsorchestrierung ZGO in einem vierundzwanzigsten Zustand Z24 extern sichtbare, technische Schnittstell-Typen definiert.

Mit der Ermittlung der extern sichtbaren, technischen Schnittstellen findet jetzt gemäß der Zugriffsorchestrierung ZGO der Übergang von der zwiten Orchestrierungsphase OP-2 zur dritten Orchestrierungsphase OP-3 statt.

Gemäß der dritten Orchestrierungsphase OP-3 bei der Zugriffsorchestrierung ZGO werden eine Reduzierung des Teilmodellinhalts basierend dem ermittelten Reduktionspotential durchgeführt und die Referenzmodellkomponente RMKₓ erzeugt. Ausgangspunkt ist hierfür nach dem Übergang von der zweiten Orchestrierungsphase OP-2 in dem dreiundzwanzigsten Zustand Z23 zu der dritten Orchestrierungsphase OP-3 in einem fünfundzwanzigsten Zustand Z25. In diesem fünfundzwanzigsten Zustand Z25 werden im Zuge der benutzerbasierten Daten- und Befehlseingabe bei der Zugriffsorchestrierung ZGO von dem Anwender ANW oder Benutzer BEN die Vorauswahl abermals überprüft und die Vorauswahl an die extern sichtbaren, technischen Schnittstellen angepasst.

Auf der Basis dieser abermaligen Anpassung wird in einem sechsundzwanzigsten Zustand Z26 im Zuge der logikbasierten Datenbearbeitung und Befehlsumsetzung bei der Zugriffsorchestrierung ZGO basierend auf der Auswahl des Anwenders ANW oder Benutzers BEN die geeignete Referenzmodellkomponente RMKₓ mit der reduzierten Komplexität im gewählten Zielmodell und/oder in der gewählten Zielbibliothek sowie im gewählten Zielpaket erzeugt.

Nach der Erzeugung der geeignete Referenzmodellkomponente RMKₓ mit der reduzierten Komplexität ist diese bereit für die Wiederverwendung und wird zu diesem Zweck in einem siebenundzwanzigsten Zustand Z27 dem Modellierungswerkzeug MW übergeben. Die Referenzmodellkomponente RMKₓ enthält hierfür Sub-Elemente gegliedert nach Perspektiven, wie die offenen Variabilitätspunkte, die garantierten, nichtfunktionalen Anforderungen, die sichtbaren Funktionen und die extern sichtbaren technischen Schnittstellen.

Zum Schluss der Zugriffsorchestrierung ZGO, der der dritten Orchestrierungsphase OP-3 und dem Ende des Ablaufdiagramms wird in einem achtundzwanzigsten Zustand Z28 im Zuge der benutzerbasierten Daten- und Befehlseingabe von dem Anwender ANW oder Benutzer BEN das Ergebnis der der Zugriffsorchestrierung ZGO überprüft und die Grafische Benutzeroberfläche GBOF (engl. Graphical User Interface <GUI>) geschlossen und beendet.

## Patentansprüche

1. Verfahren zum referenzmodellbasierten, komponentenbezogenen Entwickeln eines technischen Systems (SYₜ), bei dem in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellkomponenten (RMK) zur Entwicklung des technischen Systems (SYₜ) wiederverwendbar sind,
**gekennzeichnet durch**
a) eine computergestützte Zugriffsorchestrierung (ZGO), bei der
- mit einer benutzerbasierten Daten- und Befehlseingabe sowie einer logikbasierten Datenbearbeitung und Befehlsumsetzung nach regelsatzbasierter Maßgabe der Zugriff orchestriert wird, und
- für eine zur Entwicklung des technischen Systems (SYₜ), insbesondere durch Benutzerauswahl, vorgesehene, dedizierte Systemkomponente (SYK_{d}), die einen Beitrag zur Funktion des technischen Systems (SYₜ) leistet, in Bezug auf das Referenz-System (RSYₜ) mit den Referenz-Systemkomponenten (RSYK) eine zu diesem Zweck geeignete Referenzmodellkomponente (RMKₓ) der wiederverwendbaren Referenzmodellkomponenten (RMK) ermittelt wird, mit der
**a1**) in einer ersten Orchestrierungsphase (OP-1) ein Ablageort in dem Digitalen Zwilling (DZ) für die zur Entwicklung des technischen Systems (SYₜ) geeignete Referenzmodellkomponente (RMKₓ) ermittelt wird,
**a2**) in einer zweiten Orchestrierungsphase (OP-2) ein zum Ablageort gehörender Teilmodellinhalt des Digitalen Zwillings (DZ) und ein Reduktionspotential des Teilmodellinhalts in Bezug auf ein mit der Wiederverwendung der Referenzmodellkomponente (RMKₓ) für die Entwicklung des technischen Systems (SYₜ) benötigtes Maß ermittelt werden,
**a3)** in einer dritten Orchestrierungsphase (OP-3) eine Reduzierung des Teilmodellinhalts gemäß dem ermittelten Reduktionspotential durchgeführt und die Referenzmodellkomponente (RMKₓ) erzeugt wird.

2. Verfahren nach Anspruch 1, **dadurch gekennzeichnet, dass**
der Ablageort für die geeignete Referenzmodellkomponente (RMKₓ) durch abgestuftes Ermitteln eines Zielmodells und/oder einer Zielbibliothek des Referenzmodells (RM) und im Weiteren eines Zielpakets als Unterstruktur des Zielmodells und/oder der Zielbibliothek des Referenzmodells (RM) in Bezug auf einen Teilmodellinhalt des Digitalen Zwillings (DZ) ermittelt wird.

3. Verfahren nach Anspruch 2, **dadurch gekennzeichnet, dass**
der zum Ablageort gehörende und für die Wiederverwendung maßgebende Teilmodellinhalt und das Reduktionspotential des Teilmodellinhalts in Bezug auf ein mit der Wiederverwendung der Referenzmodellkomponente (RMKₓ) für die Entwicklung des technischen Systems (SYₜ) benötigtes Maß ermittelt werden, indem in der nachfolgend angegebenen Reihenfolge
- Varianten der Referenzmodellkomponente (RMKₓ) für den Fall, dass das Referenzmodell (RM) komponentenmäßig überrepräsentiert ist, ermittelt werden,
- offene Variabilitätspunkte ermittelt werden,
- garantierte, nichtfunktionale Anforderungen ermittelt werden,
- sichtbare Funktionen ermittelt werden und
- extern sichtbare, technische Schnittstellen ermittelt werden.

4. Computer-Programm-Produkt (CPP) zum referenzmodellbasierten, komponentenbezogenen Entwickeln eines technischen Systems (SYₜ) mit einem nicht-flüchtigen, lesbaren Speicher (SP), in dem prozessorlesbare Steuerprogrammbefehle eines Programm-Moduls (PGM) zum referenzmodellbasierten, komponentenbezogenen Entwickeln des technischen Systems (SYₜ) gespeichert sind, und einem mit dem Speicher (SP) verbundenen Prozessor (PZ), der die Steuerprogrammbefehle des Programm-Moduls (PGM) zur Systementwicklung ausführt, wobei hierfür in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellkomponenten (RMK) zur Entwicklung des technischen Systems (SYₜ) wiederverwendbar sind,
**dadurch gekennzeichnet, dass**
der Prozessor (PZ) und das Programm-Modul (PGM) zur Entwicklung des technischen Systems (SYₜ) derart ausgebildet sind, dass
a) im Zuge einer Zugriffsorchestrierung (ZGO), bei der
- mit einer benutzerbasierten Daten- und Befehlseingabe sowie einer logikbasierten Datenbearbeitung und Befehlsumsetzung nach regelsatzbasierter Maßgabe der Zugriff orchestriert wird, und
- für eine zur Entwicklung des technischen Systems (SYₜ), insbesondere durch Benutzerauswahl, vorgesehene, dedizierte Systemkomponente (SYK_{d}), die einen Beitrag zur Funktion des technischen Systems (SYₜ) leistet, in Bezug auf das Referenz-System (RSYₜ) mit den Referenz-Systemkomponenten (RSYK) eine zu diesem Zweck geeignete Referenzmodellkomponente (RMKₓ) der wiederverwendbaren Referenzmodellkomponenten (RMK) ermittelt wird,
**a1**) in einer ersten Orchestrierungsphase (OP-1) ein Ablageort in dem Digitalen Zwilling (DZ) für die zur Entwicklung des technischen Systems (SYₜ) geeignete Referenzmodellkomponente (RMKₓ) ermittelt wird,
**a2**) in einer zweiten Orchestrierungsphase (OP-2) ein zum Ablageort gehörender Teilmodellinhalt des Digitalen Zwillings (DZ) und ein Reduktionspotential des Teilmodellinhalts in Bezug auf ein mit der Wiederverwendung der Referenzmodellkomponente (RMKₓ) für die Entwicklung des technischen Systems (SYₜ) benötigtes Maß ermittelt werden,
**a3**) in einer dritten Orchestrierungsphase (OP-3) eine Reduzierung des Teilmodellinhalts gemäß dem ermittelten Reduktionspotential durchgeführt und die Referenzmodellkomponente (RMKₓ) erzeugt wird.

5. Computer-Programm-Produkt (CPP) nach Anspruch 4,
**dadurch gekennzeichnet, dass**
der Prozessor (PZ) und das Programm-Modul (PGM) zur Entwicklung des technischen Systems (SYₜ) derart ausgebildet sind, dass der Ablageort für die geeignete Referenzmodellkomponente (RMKₓ) durch abgestuftes Ermitteln eines Zielmodell und/oder einer Zielbibliothek des Referenzmodells (RM) und im Weiteren eines Zielpakets als Unterstruktur des Zielmodells und/oder der Zielbibliothek des Referenzmodells (RM) in Bezug auf einen Teilmodellinhalt des Digitalen Zwillings (DZ) ermittelt wird.

6. Computer-Programm-Produkt (CPP) nach Anspruch 5,
**dadurch gekennzeichnet, dass**
der Prozessor (PZ) und das Programm-Modul (PGM) zur Entwicklung des technischen Systems (SYₜ) derart ausgebildet sind, dass der zum Ablageort gehörende und für die Wiederverwendung maßgebende Teilmodellinhalt und das Reduktionspotential des Teilmodellinhalts in Bezug auf ein mit der Wiederverwendung der Referenzmodellkomponente (RMKₓ) für die Entwicklung des technischen Systems (SYₜ) benötigtes Maß ermittelt werden, indem in der nachfolgend angegebenen Reihenfolge
- Varianten der Referenzmodellkomponente (RMKₓ) für den Fall, dass das Referenzmodell (RM) komponentenmäßig überrepräsentiert ist, ermittelt werden,
- offene Variabilitätspunkte ermittelt werden,
- garantierte, nichtfunktionale Anforderungen ermittelt werden,
- sichtbare Funktionen ermittelt werden und
- extern sichtbare, technische Schnittstellen ermittelt werden.

7. Modellierungswerkzeug (MW) zum referenzmodellbasierten, komponentenbezogenen Entwickeln eines technischen Systems (SYₜ), bei dem in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellkomponenten (RMK) zur Entwicklung des technischen Systems (SYₜ) wiederverwendbar sind, mit einer Steuerungseinrichtung (STE) und einer mit der Steuerungseinrichtung (STE) verbundene Input/Output-Schnittstelle (IOSS) für Benutzereingaben und -ausgaben, wobei die Steuerungseinrichtung (STE) für die Systementwicklung mit einer Datenbank (DB) zur Speicherung des Digitalen Zwillings (DZ) verbunden ist,
**gekennzeichnet durch**
ein Computer-Programm-Produkt (CPP) nach einem der Anspruche 4 bis 6, das zur Durchführung des Verfahrens nach einem der Ansprüche 1 bis 3 in die Steuerungseinrichtung (STE) ladbar ist.
